# EUROPEAN PATENT APPLICATION

(11) **EP 1 052 399 A2**
(43) Date of publication of application: **15.11.2000**
(21) Application number: 00109806.0
(22) Date of filing: 09.05.2000
(51) Int. Cl.: F02N 11/08

(54) **Engine auto-stop & restart system**

(30) Priority: 14.05.1999 JP 13389499
(71) Applicant: NISSAN MOTOR COMPANY, LIMITED, Yokohama-shi, Kanagawa 221-0023 (JP)
(72) Inventor: Nakajima, Yuki, Yokohama-shi, Kanagawa 236-0057 (JP); Ogane, Hiroaki, Fujisawa-shi, Kanagawa 251-0014 (JP); Yoshino, Takahiro, Yokosuka-shi, Kanagawa 239-0822 (JP)
(74) Representative: Weber, Joachim, Dr.

(57) **Abstract**

In order to inhibit ordinary operation of an engine auto-stop and restart system of a motor vehicle when the vehicle is under forward-backward movements for being put into a garage or parking place or the like, the system comprises the following elements. These elements are a first detector that detects whether the vehicle is at a standstill or not, a second detector that detects whether a brake pedal of the vehicle is depressed or not, and a third detector that detects a select position assumed by an automatic transmission mounted in the vehicle. A control unit including a microprocessor is further provided for carrying out judging whether a first given condition suited for stopping the engine is established or not, based on the judgements detected by the first and second detectors; stopping operation of the engine automatically when the first given condition is established while the engine is under operation; and keeping the operation of the engine when the select position detected by the third detector is a reverse range position even when the first given condition has been established under operation of the engine.

## Description

### BACKGROUND OF THE INVENTION

### 1. Field of the Invention

The present invention relates in general to an engine control system for a motor vehicle, and more particularly to an engine auto-stop and restart system that automatically stops the engine when the vehicle is brought to a standstill and automatically restarts the engine upon sensing a given starting condition. More specifically, the present invention relates to the engine auto-stop and restart system of a type which inhibits ordinary operation of the system when the vehicle is in a given condition, such as, under repeated forward-backward movements for being put into a garage or the like.

### 2. Description of the Prior Art

Hitherto, for achieving the above-mentioned engine control, various systems have been proposed and put into practical use, which are for example the systems disclosed in Japanese Patent First Provisional Publications 8-14076 and 9-68064. The systems of these publications are applied to a motor vehicle having an automatic transmission.

In the system of the former publication 8-14076, when for stopping for instance at a crossing, the vehicle is braked and brought to a standstill with the automatic transmission kept in D-range, the engine is automatically stopped. With this, fuel saving and emission reduction (viz., environmental protection) are both achieved. When thereafter the driver depresses the accelerator pedal, the engine becomes restarted. However, in this system, the engine auto-stopping is equally applied to a case wherein frequent forward-backward movements of the vehicle are needed for putting the vehicle into a garage or parking place. In fact, when, during the parking movement, the vehicle comes to stop, the engine auto-stopping takes place against the driver's will.

In the system of the latter publication 9-68064, in addition to the engine auto-stop and restart system, there is further employed an auto-stop inhibition system. That is, when, after running under forward first gear or reverse gear of the transmission, the vehicle is brought to a standstill with the shift lever being shifted to the neutral position, the auto-stop inhibiting system becomes operative to inhibit the auto-stopping of the engine. With this, the above-mentioned troublesome engine stopping, which would occur during the parking movement of the vehicle, is suppressed.

However, due to some reasons caused by inherent constructions, even the system of the latter publication 9-68064 has failed to give users satisfaction. That is, in the system, when the standstill of the vehicle is induced due to a red light at a crossing with the shift lever being shifted from the forward first gear position to the neutral position, the auto-stop inhibiting system becomes operative and thus the engine continues its running. Of course, in this case, fuel saving and emission reduction are not achieved. In fact, when the vehicle is brought to a standstill with the automatic transmission assuming a forward drive range, the transmission is always shifted down to the forward first gear, and thus the auto-stop inhibiting system becomes operative inevitably.

### SUMMARY OF THE INVENTION

It is therefore an object of the present invention to provide an engine auto-stop and restart system, which is free of the above-mentioned drawback.

According to the present invention, there is provided an engine auto-stop and restart system, which can automatically stop and restart the engine when a vehicle is brought to a standstill due to a red light at a crossing or so, and can inhibit such engine auto-stopping and restarting when the vehicle is under forward-backward movements for its parking or the like.

According to a first aspect of the present invention, there is provided an engine control system for use in a motor vehicle equipped with an automatic transmission. The engine control system comprises a first detector that detects whether the vehicle is at a standstill or not; a second detector that detects whether a brake pedal of the vehicle is depressed or not; a third detector that detects a select position assumed by the automatic transmission; and a control unit including a microprocessor that is programmed to do judging whether a first given condition suited for stopping the engine is established or not, based on the judgements detected by the first and second detectors; stopping operation of the engine automatically when the first given condition is established while the engine is under operation; and keeping the operation of the engine when the select position detected by the third detector is a reverse range position even when the first given condition has been established under operation of the engine.

According to a second aspect of the present invention, there is provided a method for controlling an engine of a motor vehicle equipped with an automatic transmission. The method comprises preparing a first information signal representing whether the vehicle is at a standstill or not, a second information representing whether a brake pedal of the vehicle is depressed or not, and a third information signal representing a select position assumed by the automatic transmission; judging whether a first given condition suited for stopping the engine is established or not, based on the first and second information signals; stopping operation of the engine automatically when the first given condition is established while the engine is under operation; and keeping the operation of the engine when the third information signal represents a reverse range position even when the first given condition has been established under operation of the engine.

### BRIEF DESCRIPTION OF THE DRAWINGS

Fig. 1 is a schematic diagram of an engine auto-stop and restart system, which is a first embodiment of the present invention;
Fig. 2 is a flowchart showing programmed operation steps of a main routine executed by a control unit for controlling the engine auto-stop and restart system;
Fig. 3 is a partial flowchart showing a modification of the main routine of the flowchart of Fig. 2;
Fig. 4 is a flowchart showing programmed operation steps of a sub-routine executed by the control unit for carrying out auto-stopping of the engine;
Fig. 5 is a flowchart showing programmed operation steps of a sub-routine executed by the control unit for carrying out restarting of the engine;
Fig. 6 is a flowchart showing programmed operation steps of one example of a control executed by the control unit for resetting a flag "FRFIRE";
Fig. 7 is a graph depicting operation of the control, which shows an idle-stop ON/OFF condition varied in accordance with a select position "POS" and a vehicle speed "VSP"; and
Fig. 8 is a flowchart showing programmed operation steps of the other example of the control executed by the control unit for resetting the flag "FRFIRE", which is employed in an engine auto-stop and restart system of a second embodiment of the present invention.

### DETAILED DESCRIPTION OF THE INVENTION

In the following, the present invention will be described in detail with reference to the accompanying drawings.

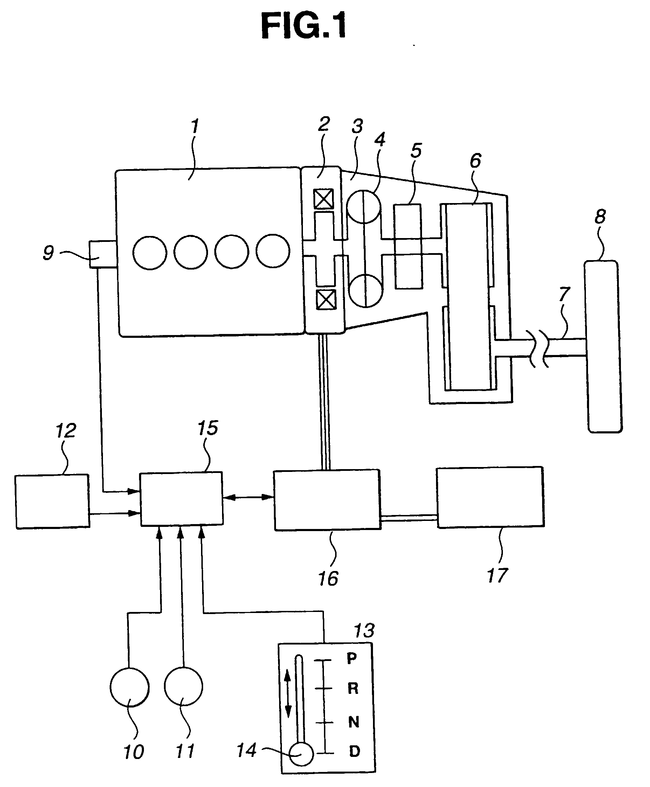

In Fig. 1, there is shown an automotive power unit to which an engine auto-stop and restart system of a first embodiment of the present invention is practically applied.

In the drawing, denoted by numeral 1 is an automotive engine, such as an internal combustion engine. Denoted by numeral 3 is an automatic transmission which has a belt type variable transmission unit 6 installed therein. The automatic transmission 3 is connected to the engine 1 through a motor-generator 2 which serves as both a generator and a motor. The motor-generator 2 is connected to a crankshaft of the engine 1 to rotate therewith.

As shown, the automatic transmission 3 comprises generally a torque converter 4, a forward/backward drive switching unit 5 and the above-mentioned belt type variable transmission unit 6. Denoted by numerals 7 and 8 are a drive shaft and a drive wheel respectively. That is, a driving force generated by the engine 1 is transmitted to the drive shaft 7 and then to the drive wheel 8 through the automatic transmission 3, more specifically, through the torque converter 4, the forward/backward drive switching unit 5 and the belt type variable transmission unit 6.

If desired, the connection of the motor-generator 2 with the crankshaft of the engine 1 may be made by using a belt or chain. Furthermore, if desired, in place of the belt type variable transmission unit 6, a conventional planetary gear type transmission unit may be used.

For monitoring the operation condition of an associated motor vehicle, various sensors are used, which are an engine speed sensor 9 for sensing an engine speed "Ne", a vehicle speed sensor 10 for sensing a vehicle speed "VSP", an accelerator operation degree sensor 11 for sensing a depression degree of an accelerator pedal, a brake switch 12 for sensing whether a brake pedal is depressed or not and a select switch 13 for sensing a select position "POS" selected by a shift lever 14. Information signals from these sensors and switches are all led to a control unit 15 which is a microprocessor including CPU, RAM, ROM and Input and Output interfaces.

It is to be noted that the select positions "POS" selected by the shift lever 14 are P-range (viz., Park) position, R-range (viz., Reverse) position, N-range (viz., Neutral) position and D-range (viz., Drive) position.

Based on the information signals from the sensors 9, 10 and 11 and switches 12 and 13, the control unit 15 carries out a fuel injection control for the engine 1. In addition to this control, the control unit 15 carries out an engine auto-stop and restarting in accordance with an existing situation of an associated motor vehicle. That is, as will become apparent as the description proceeds, when the vehicle comes to a standstill, the control unit 15 carries out the engine auto-stop and restarting in accordance with the existing situation of the vehicle. For restarting the engine 1, the control unit 15 controls the motor-generator 2 to output a target torque and a target rotation speed which are needed for restarting or cranking the engine 1. For this starting of the engine 1, an electric power of a battery 17 is fed to the motor-generator 2 through an inverter 16.

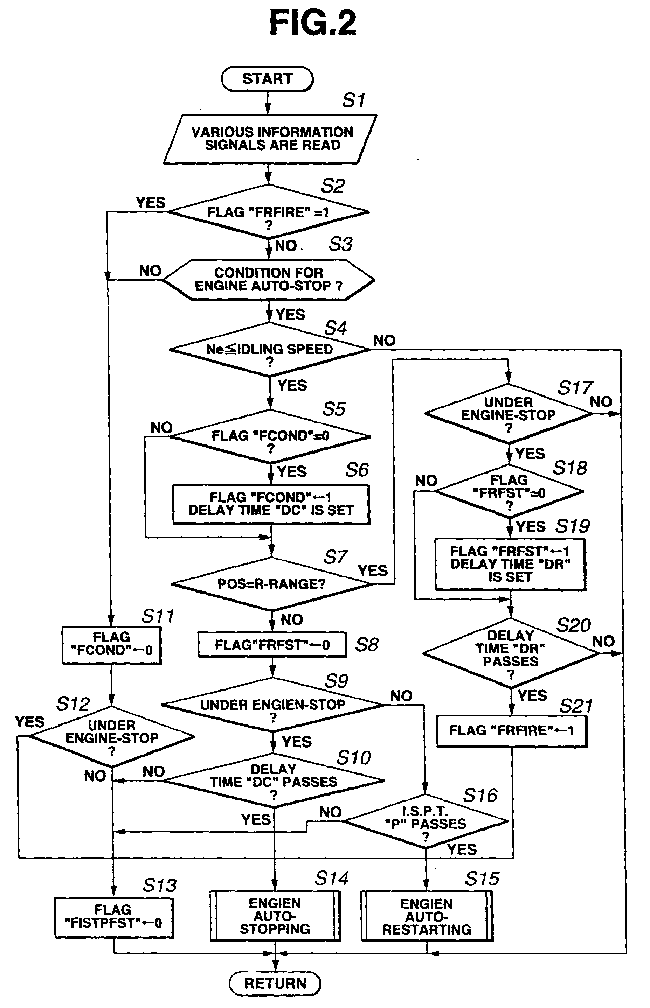

In the following, the control for the engine auto-stop and restarting, which is executed in the control unit 15, will be described in detail with reference to flowcharts of Figs. 2 to 6. For ease of description, the control for the engine auto-stop and restarting will be referred to "idling stop control" hereinafter.

Fig. 2 is a flowchart showing programmed operation steps of a main routine executed by the control unit 15 for carrying out the idling stop control. The main routine is carried out periodically with an operation cycle of, for example, 10msec. or so.

At step S1, various information signals from the sensors 9, 10 and 11 and switches 12 and 13 are read. Then, at step S2, a judgement is carried out as to whether a flag "FRFIRE" is 1 (one) or not. That is, when restarting of the engine 1 has taken place upon selecting R-range position by the shift lever 14, the flag "FRFIRE" assumes 1 (one). If YES (viz., the flag "FRFIRE" is 1 (one)), that is, when restarting of the engine 1 has actually taken plate, the operation flow goes to step S11, while, if NO (viz., the flag "FRFIRE" is 0 (zero)), that is, when restarting of the engine 1 has not taken place, the operation flow goes to step S3 where process for the engine-auto stop and restarting control starts.

At step S3, based on the information signals read at step S1, a judgement is carried out as to whether a condition for effecting an engine auto-stopping has been established or not. That is, when, for example, the vehicle speed "VSP" is equal to or almost 0 (viz., VSP ≒ 0), the brake switch 12 is ON (viz., the brake pedal is depressed) and the accelerator pedal is kept released, the judgement is so made that the condition for effecting the engine auto-stop has become established. Upon this judgement, the operation flow goes to step S4. While, if NO at step S3, that is, when the condition for the engine auto-stop has not become established, the operation flow goes to step S11. At this step S11, a flag "FCOND" is reset to 0 (zero), showing that the condition for the engine auto-stop has not been established.

At step S4, a judgement is carried out as to whether the engine speed "Ne" is equal to or lower than a predetermined idling speed or not. If NO, that is, when the engine speed "Ne" is higher than the idling speed, the operation flow goes to END (viz., RETURN) without effecting the engine auto-stopping, judging that the engine 1 is under a normal operation condition.

While, if YES at step S4, that is, when the engine speed "Ne" is equal to or lower than the idling speed, the operation flow goes to step S5. At this step S5, a judgement is carried out as to whether the flag "FCOND" is 0 (zero) or 1 (one).

If YES, that is, when the flag "FCOND" is 0 (zero), the operation flow goes to step S6 to set the flag "FCOND" to 1. In addition, at this step S6, a delay time "DC" is set to a predetermined time, for example, about 1 second. While, if NO at step S5, that is, when the flag "FCOND" is 1 (one), the operation flow goes to step S7 since the delay time "DC" has been set.

At step S7, a judgement is carried out as to whether the select position "POS" is R-range position or not. If YES, that is, when the select position "POS" is R-range position, the operation flow goes to step S17 to inhibit the engine auto-stopping (or idle-stopping). While, if NO at step S7, that is, when the select position "POS" is a position (that is, D-range position, N-range position or P-range position) other than R-range position, the operation flow goes to step S8.

At step S8, a flag "FRFST" for indicating the select position "POS" being R-range position is reset to 0 (zero). Then, the operation flow goes to step S9 where a judgement is carried out as to whether the engine 1 is under idle-stopping or not. If YES, that is, when the engine 1 is under idle-stopping, the operation flow goes to step S16. While, if NO at step S9, that is, when the engine 1 is not under idle-stopping, that is, when the engine 1 is under operation, the operation flow goes to step S10 where a judgement is carried out as to whether the delay time "DC" set at step S6 has passed or not.

At step S10, the delay time "DC" is subjected to a subtraction each time the operation cycle passes. That is, when the delay time "DC" becomes 0 (that is, DC = 0), passage of the delay time "DC" is judged. Upon judgement of this passage of the delay time "DC", the operation flow goes to step S14 to carry out an after-mentioned engine auto-stop processing. While, if NO at step S10, that is, when passage of the delay time "DC" is not judged, the operation flow goes to step S13. At this step S13, a flag "FISTPFST" for indicating starting of the idle-stopping is reset to 0 (zero) and finishes the processing.

As has been mentioned hereinabove, if at step S9 it is judged that the engine 1 is under idle-stopping, the operation flow goes to step S16. At this step S16, a judgement is carried out as to whether an after-mentioned idle-stop permitting time "P" has passed or not. In fact, the idle-stop permitting time "P" is set in an idle-stop processing that will be described in detail hereinafter. If YES, that is, when the idle-stop permitting time "P" has passed, the operation flow goes to step S15 to carry out an after-mentioned engine restarting processing. While, if NO at step S16, that is, when the idle-stop permitting time "P" has not passed yet, the operation flow goes to step S13 resetting the flag "FISTPFST" to 0 (zero) and finishes the processing.

If YES at step S2, that is, when it is judged that the flag "FRFIRE" is 1 (one) and/or if NO at step S3, that is, when the condition for the idle-stopping is not established, the operation flow goes to step S11 where the flag "FCOND" for indicating establishment of the idle-stop condition is reset to 0 (zero), and then the operation flow goes to step S12 where a judgement is carried out as to whether the engine 1 is under stopping or not. If YES, that is, when the engine 1 is under stopping, the operation flow goes to step S15 to carry out the engine restarting processing. If NO at step S12, that is, when the engine 1 is under operation, the operation flow goes to step S13 resetting the flag "FISTPFST" to 0 (zero) and finishes the processing.

As is described hereinabove, If YES at step S7, that is, when the select position "POS" is judged as R-range position, the idle-stopping is inhibited for carrying out operation of the engine 1. For this purpose, the operation flow goes to step S17. At this step S17, a judgement is carried out as to whether the engine 1 is under stopping or not. If NO, that is, when the engine 1 is not under stopping, that is when the engine 1 is under operation, the processing is finished. While, if YES, that is, when the engine 1 is under stopping, the operation flow goes to step S18 to judge whether the flag "FRFST" is 0 (zero) or not.

If YES at step S18, that is, when the flag "FRFST" is 0 (zero), it is judged that the processing is an initial operation cycle that is induced from both the select position "POS" being R-range position and the establishment of the condition for the idle-stopping. Thus, the operation flow goes to step S19 to set a delay time "DR" to a predetermined value, for example, about 1 second and at the same time to set the flag "FRFST" to 1 (one). Then, the operation flow goes to step S20. It is to be noted that the delay time "DR" is used for avoiding a mis-judgement that would take place when as is seen from Fig. 1 the shift lever 14 is moved from P-range position to for example D-range position. During this movement, the shift lever 14 passes through R-range position. Thus, if the delay time "DR" is not provided, the shift lever movement from P-range position to D-range position may induce such a mis-judgement that the select position "POS" is R-range position.

Referring back to Fig. 2, if NO at step S18, that is, when the flag "FRFST" is 1 (one), the operation flow goes directly to step S20 since the delay time "DR" has been already set.

At step S20, a judgement is carried out as to whether the delay time "DR" has passed or not. If NO, that is, when the delay time "DR" has not passed, the processing is finished for waiting for the passage of the delay time "DR". While, if YES, that is, when the delay time "DR" has passed, the operation flow goes to step S21 to set the flag "FRFIRE" to 1 (one). That is, since the condition for the idle-stopping has been established and restarting of the engine 1 has been carried out due to selection of R-range position by the shift lever 14, the flag "FRFIRE" is set to 1 (one). Then, the operation flow goes to step S15 to actually carry out the restarting of the engine 1.

Accordingly, even if the select position "POS" is a position other than R-range position, establishment of the condition for the idle-stopping induces the auto-stopping of the engine 1 upon passage of a predetermined time. While, in case wherein the select position "POS" is R-range position, the idle-stopping is inhibited, and when the engine 1 is under stopping, restarting of the engine 1 is induced upon passage of the predetermined time.

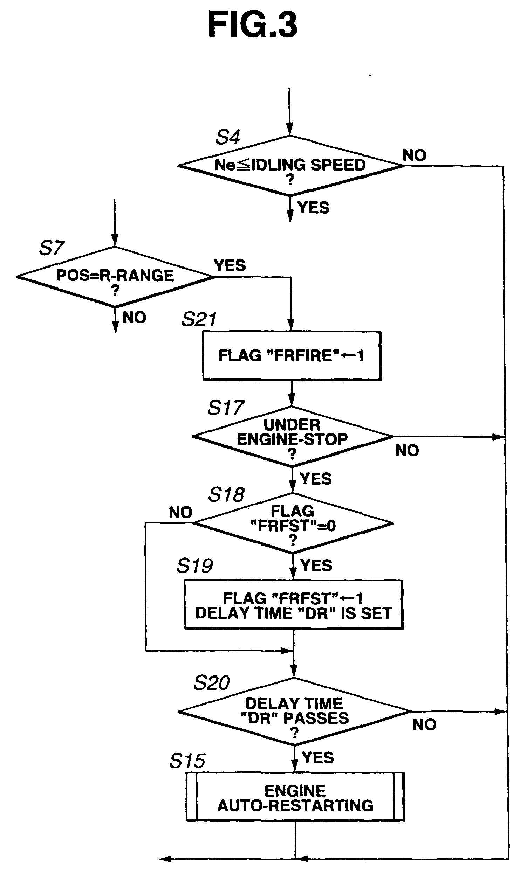

If desired, as is shown in Fig. 3, the step S21 may be put in front of the step S17. In this case, If YES at step S7, the operation flow goes to step S21 to set the flag "FRFIRE" to 1 (one) and then the operation flow goes to step S17. Thus, irrespective of whether restarting of the engine has been carried out or not at R-range position, the flag "FRFIRE" is set to 1 (one) only when the select position "POS" takes R-range position. Thus, until the time when the condition for permitting the engine stop is established, inhibition of the idle-stopping is kept.

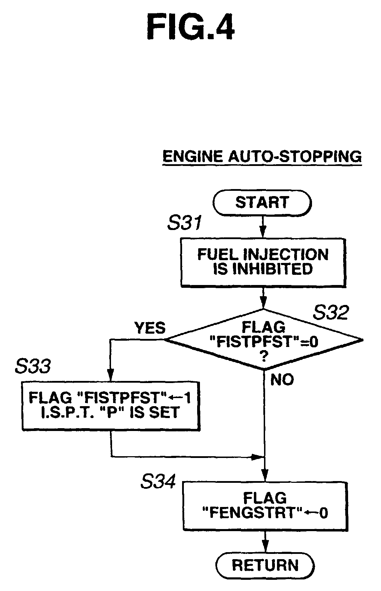

In the following, the engine idle-stopping process carried out at step S14 will be described in detail with reference to the flowchart of Fig. 4.

At step S31, fuel injection is inhibited to stop the engine 1. Then, at step S32, a judgement is carried out as to whether the flag "FISTPFST" is 0 (zero) or not. It is to be noted that this flag "FISTPFST" is a flag for indicating starting of the idle-stopping. If YES (or 0 (zero)), that is, when starting of the idle-stopping is not judged, the operation flow goes to step S33 to set the flag "FISTPFST^{"} to 1 (one) and at the same time to set the idle-stop permitting time "P" to a predetermined time for example 1 to 2 minutes. Then, the operation flow goes to step S34. It is to be noted that the idle-stop permitting time "P" is determined in accordance with a stop time for which due to a red light the vehicle should keep in a standstill with an idling engine speed.

While, if the judgement at step S32 indicates 1 (one), that is, when starting of the idle-stopping is judged, the operation flow goes straightly to step S34 since the idle-stop permitting time "P" has been already set. At step S34, a flag "FENGSTRT" for indicating restarting of the engine 1 is reset to 0 (zero) and the processing is finished. As will become apparent from the following, restarting of the engine 1 is judged by the engine restarting process.

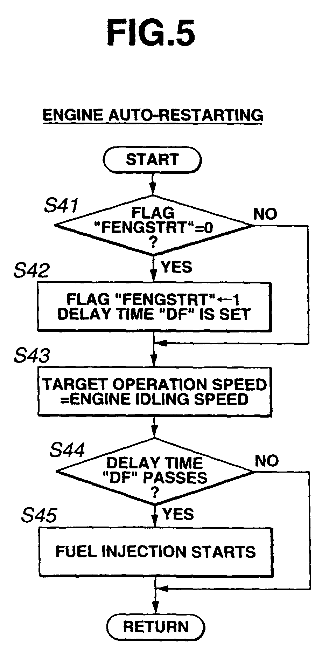

In the following, the engine restarting process carried out at step S15 will be described in detail with reference to the flowchart of Fig. 5.

At step S41, a judgement is carried out as to whether the flag "FENGSTRT" for indicating restarting of the engine 1 from the idle-stopping is 0 (zero) or not. If YES (or 0 (zero)), that is, when restarting of the engine is not judged, the operation flow goes to step S42 to set the flag "FENGSTRT" to 1 (one) and at the same time to set a delay time "DF" to a predetermined time, for example, 1 to 2 seconds. Then, the operation flow goes to step S43. It is to be noted that the delay time "DF" is determined in accordance with a rise of the rotation speed of the motor-generator 2 in order to reduce an initial explosion torque upon restarting of the engine 1.

While, if NO (or 1 (one)) at step S41, that is, when restarting of the engine 1 is judged, the operation flow goes directly to step S43 since the delay time "DF" has been already set. At step S43, the target rotation speed of the motor-generator 2 is set to the idling speed to drive the motor-generator 2 at the speed. Then, the operation flow goes to step S44 to judge whether the delay time "DF" has passed or not. If YES, that is, when the delay time "DF^{"} has passed, the operation flow goes to step S45 to restart the fuel injection for restarting the engine 1.

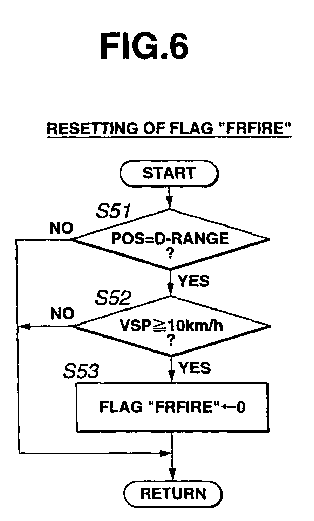

In the following, a releasing process for releasing the idle-stop inhibition will be described in detail with reference to the flowchart of Fig. 6. The releasing process is carried out after the idle-stopping is inhibited. As has been mentioned hereinabove, inhibition of idle-stopping takes place when the flag "FRFIRE" is turned to 1 (one) due to shifting of the shift lever 14 to R-range position during idle-stopping or upon establishment of the condition for idle-stopping.

In the flowchart of Fig. 6, at step S51, a judgement is carried out as to whether the select position "POS" is D-range position or not. If YES, that is, when the select position "POS" is D-range position, the operation flow goes to step S52. At this step S52, a judgement is carried out as to whether the existing vehicle speed "VSP" is equal to or higher than a predetermined lower level, for example, 10Km/h. If YES, that is, when the vehicle speed "VSP" is higher than the lower level, the operation flow goes to step S53, judging that a normal running of the vehicle has begun. At step S53, the flag "FRFIRE" is reset to 0 (zero). With this, in a subsequent operation cycle, if the condition for idle-stopping is established in a position other than R-range position, auto-stopping of the engine 1 is permitted.

As is understood from the above, in the present invention, even when the condition for idle-stopping is established, the idle-stopping becomes inhibited when the select position "POS" has taken R-range position and thus in this condition, restarting of the engine 1 takes place.

Once the idle-stopping is inhibited, this inhibition is maintained even if the select position "POS" changes to D-range position, N-range position or P-range position. Accordingly, even when, for the purpose of putting the vehicle into a garage or parking place, a driver repeatedly shifts the shift lever 14 for effecting frequent forward-backward movements of the vehicle, troublesome frequent engine stopping is suppressed in accordance with the present invention.

Furthermore, the inhibition of the idle-stopping is automatically released when the vehicle is brought to a normal running. Of course, thereafter, when the vehicle stops for example at a crossing due to a red light, the idle-stopping is carried out thereby saving fuel and reducing emission.

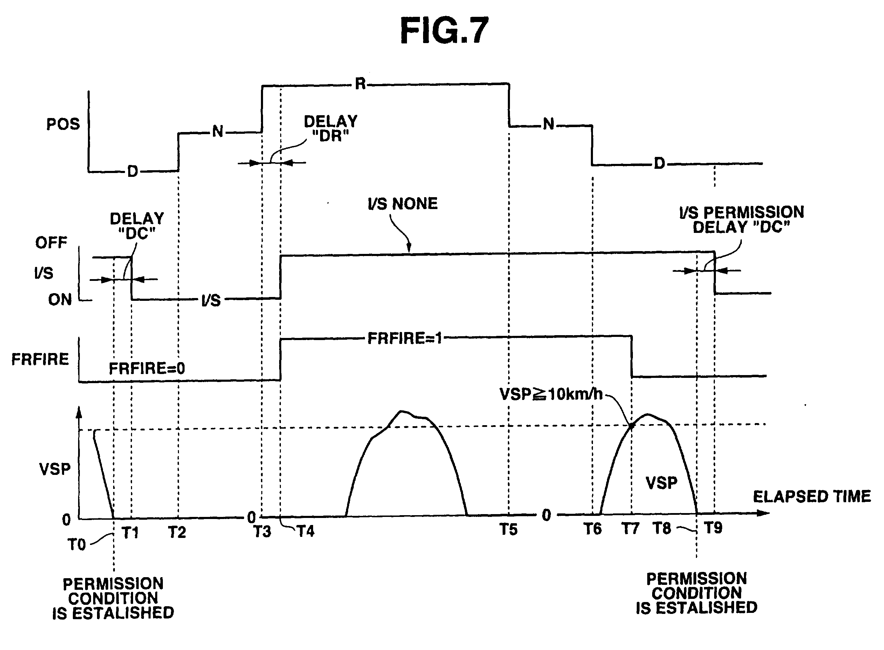

In the following, one example of the above-mentioned idle-stopping control will be described with reference to the graph of Fig. 7.

When, after a vehicle runs normally under D-range and stops at the time "T0", the condition for the idle-stopping becomes established like in a manner as has been described at the section of step S3 (see Fig. 2), the actual idle-stopping starts at the time "T1" that arrives after the delay time "DC" (step S6) from the time "T0". Upon this, the idle-stopping "I/S" becomes operative (or ON), that is, the flag "FCOND" at step S6 is set to 1 (one).

As shown in the graph, even when the select position "POS" changes to N-range position at the time "T2", the idle-stopping is maintained. However, when the select position "POS" changes to R-range position at the time "T3", the idle-stopping becomes inhibited (or OFF) at the time "T4" that arrives after the delay time "DR" (step S17 and following steps) from the time "T3". Thus, upon this, the engine 1 is automatically restarted. From the time "T4", the flag "FRFIRE" is kept 1 (one) and the flag "FCOND" is kept 0 (zero).

As is seen from the graph, once the inhibition of the idle-stopping is established, changing of the select position "POS" to N-range position at the time "T5" or to D-range position at the time "T6" does not induce stopping of the engine 1. Thus, as has been described hereinabove, the troublesome frequent engine stopping, which would occur when a driver repeatedly shifts the shift lever 14 for effecting frequent forward-backward movements of the vehicle for putting the vehicle into a garage or parking place, is suppressed.

When, after shifting the shift lever 14 to D-range position at the time "T6", the vehicle speed "VSP" exceeds a predetermined speed (for example, 10 Km/h) at the time "T7" bringing about a normal running of the vehicle, the flag "FRFIRE" (steps S51 to S53) is reset to 0 (zero) permitting the idle-stopping in a subsequent operation cycle. Accordingly, if the vehicle is then stopped at the time "T8" under D-range position, the idle-stopping of the engine 1 takes place again at the time "T9" that arrives after the delay time "DC" from the time "T8", which promotes fuel saving and emission reduction.

Once R-range position is selected, the inhibition of the idle-stopping is not carried out until the predetermined delay time "DR" passes. Thus, if the select operation is so made as to pass the shift lever 14 through R-range position, unexpected restarting of the engine 1 does not occur.

When the select position "POS" assumes R-range position, the idle-stopping is always inhibited, and thus a driver can easily master the starting condition of the idle-stopping, and thus, he or she can carry out a driving operation with good feeling.

As is known, it is very rare to stop the vehicle for a long time with the shift lever 14 left at R-range position. Accordingly, even when the idle-stopping is inhibited at R-range position, fuel consumption and emission can be negligible.

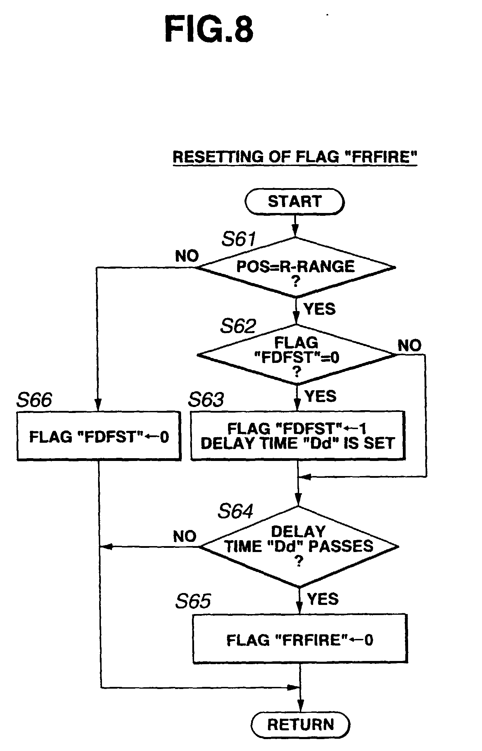

Referring to Fig. 8, there is shown a flowchart of operation steps for resetting the flag "FRFIRE", which is employed in an engine auto-stop and restart system of a second embodiment of the present invention.

In the flowchart of Fig. 8, at step S61, a judgement is carried out as to whether the select position "POS" is R-range position or not. If NO, that is, when the select position "POS" is a position other than R-range position, the operation flow goes to step S62 to judge whether a flag "FDFST" indicating permission of the idle-stopping is 0 (zero) or not. While, if YES at step S61, that is, when the select position "POS" is R-range position, the operation flow goes to step S66 to reset the flag "FDFST" to 0 (zero).

If YES at step S62, that is, when the flag "FDFST" is 0 (zero), or that is, when permission of the idle-stopping is not indicated, the operation flow goes to step S63 to set the flag "FDFST" to 1 (one) and at the same time to set a delay time "Dd" until permission of the idle-stopping to a predetermined time, for example, about 60 seconds. Thereafter, the operation flow goes to step S64.

If NO at step S62, that is, when the flag "FDFST" is 1 (one), or that is, when the permission of the idle-stopping is indicated, the operation flow goes directly to S64 since the delay time "Dd" has been already set.

At step S64, a judgement is carried out as to whether the delay time "Dd" has passed or not. If YES, that is, when the delay time "Dd" has passed, the operation flow goes to step S65 to reset the flag "FRFIRE" to 0 (zero).

Accordingly, when, after inhibition of the idle-stopping, the delay time "Dd" passes from the time when the select position "POS" has taken a position other than R-range position, the idle-stopping is permitted again. Thus, when the vehicle is kept in a standstill after being moved into a garage or parking place, the engine 1 is automatically stopped thereby promoting the fuel saving and emission reduction.

The entire contents of Japanese Patent Application P11-133894 (filed May 14, 1999) are incorporated herein by reference.

Although the invention has been described above with reference to certain embodiments of the invention, the invention is not limited to the embodiments described above. Various modifications and variations of the embodiments described above will occur to those skilled in the art, in light of the above teachings.

## Claims

1. An engine control system for use in a motor vehicle equipped with an automatic transmission, comprising:
a first detector that detects whether the vehicle is at a standstill or not;
a second detector that detects whether a brake pedal of the vehicle is depressed or not;
a third detector that detects a select position assumed by said automatic transmission; and
a control unit including a microprocessor that is programmed to do:
judging whether a first given condition suited for stopping the engine is established or not, based on the judgements detected by said first and second detectors;
stopping operation of the engine automatically when said first given condition is established while the engine is under operation; and
keeping the operation of the engine when the select position detected by said third detector is a reverse range position even when said first given condition has been established under operation of the engine.

2. An engine control system as claimed in Claim 1, in which said microprocessor is further programmed to do judging establishment of said engine auto-stopping condition when standstill of the vehicle is detected by said first detector and depression of the brake pedal is detected by said second detector.

3. An engine control system as claimed in Claim 1, in which said microprocessor is further programmed to do:
keeping said first given condition for a first given period from a time when the engine is automatically stopped to a time when said first given condition becomes disestablished; and
restarting the engine when switching of the select position to the reverse range position is detected by said third detector even in said first given period.

4. An engine control system as claimed in Claim 3, in which said microprocessor is further programmed to do keeping operation of the engine for a second given period from a time when the engine is automatically restarted to a time when a second given condition suited for permitting stopping of the engine is established, even when said first given condition has been established.

5. An engine control system as claimed in Claim 4, further comprising a fourth detector that detects a speed of said vehicle, said microprocessor being further programmed to do judging establishment of said second given condition when the select position detected by said third detector is a forward drive range position and the vehicle speed detected by said fourth detector exceeds a predetermined vehicle speed.

6. An engine control system as claimed in Claim 4, in which said microprocessor is further programmed to do judging establishment of said second given condition when a first predetermined time passes from a time when switching of the select position to either one of a forward drive range position, a parking range position and a neutral range position has been detected by said third detector.

7. An engine control system as claimed in Claim 3, in which said microprocessor is further programmed to do restarting the engine automatically when a second predetermined time passes from a time when switching of the select position to a reverse range position has been detected by said third detector.

8. An engine control system as claimed in Claim 7, in which said second predetermined time is set to a time needed for changing said select position.

9. An engine control system as claimed in Claim 1, in which said microprocessor is programmed to do keeping operation of the engine for a third given period from a time when the select portion detected by said third detector is a reverse range position to a time when a second given condition suited for permitting stopping of the engine is established, even when said first given condition has been established.

10. A method for controlling an engine of a motor vehicle equipped with an automatic transmission, comprising:
preparing a first information signal representing whether the vehicle is at a standstill or not, a second information representing whether a brake pedal of the vehicle is depressed or not, and a third information signal representing a select position assumed by said automatic transmission;
judging whether a first given condition suited for stopping the engine is established or not, based on said first and second information signals;
stopping operation of the engine automatically when said first given condition is established while the engine is under operation; and
keeping the operation of the engine when the third information signal represents a reverse range position even when said first given condition has been established under operation of the engine.
